# EUROPÄISCHE PATENTSCHRIFT

(11) **EP 0 472 860 B1**
(45) Veröffentlichungstag und Bekanntmachung des Hinweises auf die Patenterteilung: **22.06.1994**
(21) Anmeldenummer: 91111189.6
(22) Anmeldetag: 05.07.1991
(51) Int. Cl.: A01M 7/00

(54) **Geschlossenes landwirtschaftliches Feldspritzensystem**
Enclosed field spraying for agricultural purposes
Système de pulvérisation agricole en circuit fermé pour cultures de plein champ

(30) Priorität: 16.08.1990 DE 4025943; 24.12.1990 DE 9017473 U
(43) Veröffentlichungstag der Anmeldung: 04.03.1992
(73) Patentinhaber: Amazonen-Werke H. Dreyer GmbH & Co. KG, D-49205 Hasbergen (DE)
(72) Erfinder: Wiemeyer, Benno, W-4531 Lotte-Halen (DE)

(56) Entgegenhaltungen:
- EP-A- 0 403 859
- DE-A- 3 540 198
- FR-A- 2 498 082
- US-A- 3 385 480
- US-A- 4 244 522
- "THIS IS THE LELY FRONT TANK UNIT", LELY IMPORT LTD, STATION ROAD, ST. NEOTS, HUNTINGDON, CAMBS., PE19 QH, GB

## Beschreibung

Die Erfindung betrifft ein geschlossenes landwirtschaftliches Feldspritzensystem gemäß Oberbegriff des Patentanspruches 1.

Ein geschlossenes landwirtschaftliches Feldspritzensystem ist in der amerikanischen Patentschrift 33 85 480 beschrieben. Dieses Feldspritzensystem weist einen mittleren Flüssigkeitstank und zwei seitliche Zusatzbehälter auf, die über ein Leitungssystem miteinander verbunden sind. Über dieses Leitungssystem sind der Flüssigkeitstank und die beiden Zusatzbehälter in kommunizierender Weise miteinander verbunden. Dem Flüssigkeitstank ist eine Fördereinrichtung zum Umpumpen der Flüssigkeit aus dem mittleren Flüssigkeitstank in die beiden seitlichen Zusatzbehälter zugeordnet. Diese Fördereinrichtung ist als Airjet-Pumpe ausgebildet. Diese Pumpenart ist hier nachteilig, weil Luft in die Flüssigkeit geblasen wird. Hierdurch schäumt die Spritzflüssigkeit sehr stark auf. Diese Fördereinrichtung ist nicht dafür geeignet und auch nicht dafür vorgesehen, die Flüssigkeit aus den beiden seitlichen Zusatzbehältern in den mittleren Flüssigkeitstank zurückzupumpen. Dieses geschieht vielmehr aufgrund des natürlichen Ausgleiches zwischen den Zusatzbehältern und dem Flüssigkeitstank über das kommunizierende Leitungssystem.

Weitere geschlossene landwirtschaftliche Feldspritzensysteme sind in der landwirtschaftlichen Praxis bekannt. Durch die Anordnung des Zusatzbehälters wird die mitgeführte Menge der Spritzflüssigkeit in vorteilhafter Weise vergrößert, wodurch sich die Reichweite der zu bearbeitenden Fläche mit einfachsten Mitteln und auf kostengünstige Weise vergrößern läßt.

Bei diesen bekannten geschlossenen landwirtschaftlichen Feldspritzensystemen findet ein getrenntes Anmischen der sich in dem Flüssigkeitstank und dem Zusatzbehälter befindlichen Spritzflüssigkeiten statt, d.h., der sich in den beiden Behältern befindlichen, zur Ausbringung erforderlichen Wasseraufwandsmenge müssen die auszubringenden Pflanzenschutz-, Unkrautvernichtungs- oder Düngemittel jeweils separat zudosiert und angemischt werden. Dieses getrennte Anmischen der sich in den beiden Behältern befindlichen Spritzflüssigkeit kann Bedienungsfehler beim Anmischen hervorrufen, wenn diese beiden Flüssigkeitstanks z.B. unterschiedliche Fassungsvermögen aufweisen und die den einzelnen Behältern zudosierenden Spritzmittelkonzentratmengen versehentlich vertauscht werden, so daß sich Spritzflüssigkeiten mit unterschiedlichen Spritzmittelkonzentrationen ergeben. Während des Spritzvorganges wird dann zunächst der Flüssigkeitstank der Feldspritze entleert und anschließend die sich im Zusatzbehälter befindliche Flüssigkeitsmenge über Schlauchleitungen in den Flüssigkeitstank der Feldspritze umgepumpt. Hierzu wird eine dem Zusatzbehälter zugeordnete separate Pumpe benötigt. Dieser Flüssigkeitsaustausch zwischen den beiden Behältern, d.h., vom Zusatzbehälter zum Flüssigkeitstank der Feldspritze muß manuell überwacht und gesteuert werden, um ein evtl. Überlaufen des Flüssigkeitstanks zu verhindern.

Dieser Flüssigkeitsaustauch zwischen den beiden Behältern erfordert einen großen technischen Aufwand, da eine zusätzliche, angetriebene Pumpe erforderlich ist, wobei der Zusatzbehälter zu dem auch noch mit einer Befüllvorrichtung versehen sein muß.

Der Erfindung liegt nun die Aufgabe zugrunde, die Handhabung des gattungsgemäßen geschlossenen landwirtschaftlichen Feldspritzensystems erheblich zu verbessern.

Diese Aufgabe wird in erfindungsgemäßer Weise durch die kennzeichnenden Merkmale des Anspruches 1 gelöst.

Infolge dieser Maßnahme ergibt sich eine wesentliche Vereinfachung der Handhabung zum Befüllen eines aus Flüssigkeitstank und Zusatzbehälter bestehenden geschlossenen landwirtschaftlichen Feldspritzensystems, wobei Bedienungsfehler beim Zudosieren der Spritzmittelkonzentratmengen vermieden werden, da diese zudosierende Menge sich immer auf die gesamte in beide Behälter einzufüllende Wassermenge bezieht, d.h. auf den gesamten, zur Ausbringen erforderlichen, mitgeführten Wasseraufwand. Das Befüllen und Anmischen der Spritzflüssigkeit erfolgt zentral über den Flüssigkeitstank. Parallel zur Befüllung mit Wasser nimmt der Anwender beim Ansetzen der Spritzflüssigkeit die Zugabe des Spritzmittelkonzentrates vor.

Durch die als Wasserstrahlpumpen ausgebildete Fördereinrichtung ergibt sich eine besonders einfache, zwischen beiden Flüssigkeitstanks wirksame Fördereinrichtung, welche von der sich in dem Flüssigkeitstank befindlichen Flüssigkeit betrieben wird, ohne daß eine zusätzliche, durch Fremdenergie, wie z.B. Schlepperzapfwelle oder Hydraulikmotor, angetriebene Fördereinrichtung zum Flüssigkeitsaustausch zwischen Flüssigkeitstank und Zusatzbehälter notwendig ist. Hierdurch wird der technische Aufwand für die Umwälzung der Flüssigkeit zwischen beiden Flüssigkeitsbehältern erheblich reduziert und eine preiswerte Lösung geschaffen. Da während des Spritzvorganges ein automatischer Austausch der Spritzflüssigkeit zwischen dem Flüssigkeitstank und dem Zusatzbehälter erfolgt, entfällt die manuelle Überwachung dieses Austauschvorganges, ohne daß der Spritzvorgang unterbrochen werden muß.

Weiterhin ist in erfindungsgemäßer Weise vorgesehen, daß der Austausch der Spritzflüssigkeit zwischen dem Flüssigkeitstank und dem Zusatzbehälter automatisch erfolgt. Hierdurch wird während des Befüllens des Flüssigkeitstanks beim Erreichen einer bestimmten Füllstandshöhe in diesem Behälter automatisch Flüssigkeit in den Zusatzbehälter gefördert. Es wird also zunächst der Zusatzbehälter vollständig mit Flüssigkeit gefüllt, bevor der Flüssigkeitstank dann vollständig aufgefüllt wird. Hierbei erfolgt der Austausch der Spritzflüssigkeit zwischen dem Flüssigkeitstank und dem Zusatzbehälter mittels einer in dem Flüssigkeitstank angeordneten Fördereinrichtung.

Bei der Ausführungsform ist vorgesehen, daß der Flüssigkeitstank an der Heckseite des Ackerschleppers ankuppelbar und Bestandteil einer Feldspritze mit Pumpe, Dosierelementen und Verteilergegestänge ist, und daß der Zusatzbehälter an der Frontseite des Ackerschleppers ankuppelbar ist.

Bei der Ausgestaltung der Wasserstrahlpumpe ist in erfindungsgemäßer Weise vorgesehen, daß die jeweilige Wasserstrahlpumpe eine von der Pumpe der Feldspritze beaufschlagbare Düse aufweist, daß die Düse unmittelbar im Bereich des Einlaufkonusses der jeweiligen Wasserstrahlpumpe angeordnet ist. Weiterhin ist erfindungsgemäß vorgesehen, daß sich an jeder Düse ein Leitungsstück anschließt, daß das freie Ende des jeweiligen Leitungsstückes an einem Dreiwegehahn angeschlossen ist, daß an dem Eingang des Dreiwegehahns die von der pumpe der Feldspritze beaufschlagbare Leitung angeschlossen ist. Infolge dieser Maßnahmen läßt sich der für den Antrieb der Wasserstrahlpumpen jeweils benötigte Wasserstrahl mittels der vorhandenen Pumpe der Feldspritze erzeugen.

Zur Gewährleistung einer ordnungsgemäßen Funktionsweise der als Wasserstrahlpumpe ausgebildeten Fördereinrichtung ist erfindungsgemäß vorgesehen, daß der in der von der Pumpe der Feldspritze beaufschlagbaren, an den Eingang des Dreiwegehahns angeschlossenen Leitung herrschende Druck über die Bedienungsarmatur der Feldspritze einstellbar ist, wobei der so eingestellte Druck zur Beaufschlagung der Wasserstrahlpumpen dem eingestellten Spritzdruck entspricht.

Da die ordnungsgemäße Funktionsweise der Wasserstrahlpumpen einen Mindestdruck des die jeweilige Wasserstrahlpumpe beaufschlagenden Wasserstrahls zur Erzielung einer ausreichenden Förderwirkung erfordert, ist in der von der Pumpe zur Bedienungsarmatur führenden Leitung erfindungsgemäß ein der Bedienungsarmatur vorgeschaltetes Überdruckventil vorgeschaltet. Dieses Überdruckventil kann einen konstanten oder einstellbaren Druckwert aufweisen.

Ein besonders sicheres Umpumpen der Flüssigkeiten vom Flüssigkeitstank zum Zusatzbehälter und umgekehrt wird dadurch gewährleistet, daß die zu dem Dreiwegehahn führende Leitung in Durchflußrichtung von der Pumpe zu der Bedienungsarmatur führenden Durckleitung gesehen vor dem Überdruckventil an diese Druckleitung angeschlossen ist. Darüberhinaus wird der Spritzdruck nicht beeinflußt.

In einer weiteren vorteilhaften Ausgestaltung der Fördereinrichtung ist in erfindungsgemäßer Weise vorgesehen, daß mit dem Dreiwegehahn ein Schwimmer zusammenwirkt, daß die Betätigung des Dreiwegehahns automatisch über den Schwimmer in Abhängigkeit vom Füllstand der Flüssigkeit in dem Flüssigkeitstank erfolgt. Hierdurch läßt sich das automatische Austauschen der Flüssigkeiten zwischen dem Flüssigkeitstank und dem Zusatzbehälter auf einfachste Weise realisieren und steuern. Wird während des Befüllvorganges bzw. während des Spritzvorganges ein bestimmtes Flüssigkeitsniveau im Flüssigkeitstank über- bzw. unterschritten, wird mittels des Schwimmers über den Dreiwegehahn die Flüssigkeitszufuhr bzw. die Flüssigkeitsentnahme zum bzw. aus dem Zusatzbehälter automatisch mittels der jeweils beaufschlagten Wasserstrahlpumpe geregelt. D.h., beim Befüllen des geschlossenen landwirtschaftlichen Feldspitzensystems wird nach Erreichen eines bestimmten Flüssigkeitsniveaus im Flüssigkeitstank zunächst der Zusatzbehälter automatisch vollständig mit Flüssigkeit gefüllt, bevor der Flüssigkeitsstand im Flüssigkeitstank dann weiter ansteigt.

Nach Überschreiten eines bestimmten Flüssigkeitsniveaus im Flüssigkeitstank findet also während des Auffüllens des Flüssigkeitstanks ein ständiger Flüssigkeitsaustausch zwischen Flüssigkeitstank und Zusatzbehälter statt, so daß es zu einem guten Durchmischen und zu einer Homogenisierung der sich im geschlossenen Feldspritzensystem befindlichen Spritzflüssigkeit kommt, welche von der aus Wasser bestehenden Trägerflüssigkeit und dem hochprozentigen Spritzmittelkonzentrat gebildet wird.

Damit sich während des Befüllvorganges des geschlossenen Feldspritzensystems, wenn der Zustatzbehälter vollständig mit Flüssigkeit gefüllt und die Öffnung zum Luftentweichen verschlossen ist, kein nennenswerter Überdruck beim weiteren Umpumpen der Flüssigkeit zum Mischen entsteht, ist vorgesehen, daß der Dreiwegehahn zwei abhängig voneinander bewegbare Ventile aufweist, die jweils einer zu den Wasserstrahlpumpen führenden Leitung zugeordnet sind, wobei das der vom Zusatzbehälter zum Flüssigkeitstank führenden Leitung zugeordnete Wasserstrahlpumpe zugeordnete Ventil in seiner Endstellung eine kleine Durchflußöffnung aufweist. Somit kann also durch diese kleine Durchflußöffnung von der Pumpe die Flüssigkeit zu der Düse der Wasserstrahlpumpe gelangen, damit hierdurch unterstützend die Flüssigkeit aus dem Zusatzbehälter abgesaugt wird. Insbesondere wird durch diese Maßnahme der Rückstaudruck in der Leitung und vor der Wasserstrahlpumpe aufgehoben bzw. überwunden.

Damit sich nun während des Befüllvorganges des geschlossenen landwirtschaftlichen Feldspritzensystems, nachdem der Zusatzbehälter vollständig mit Flüssigkeit gefüllt ist, kein Überdruck durch die beim Ansteigen des Flüssigkeitsniveaus im Flüssigkeitstank durch die ständig in den Zusatzbehälter geförderten Flüssigkeitsmenge entsteht, ist in einer anderen Ausführungsform erfindungsgemäß vorgesehen, daß sich oberhalb des Einlaufzylinders der in der vom Zusatzbehälter zum Flüssigkeitstank führenden Rücklaufleitung angeordneten Wasserstrahlpumpe zumindest ein Überdruckventil befindet. Hierdurch gelangt die durch die Rücklaufleitung vom Zusatzbehälter in den Flüssigkeitstank zurückströmende Flüssigkeit nahezu drucklos von Zusatztank in den Flüssigkeitsbehälter zurück.

Damit es nun während des Befüllvorganges des geschlossenen Spritzensystems nicht zur Erzeugung eines Überdruckes durch die sich im Zusatzbehälter im entleertem Zustand befindlichen Luft kommt, weist der Zusatzbehälter ein Entlüftungsventil auf. Hierbei ist dann weiterhin erfindungsgemäß vorgesehen, daß in dem Flüssigkeitstank ein ballähnlicher Schwimmer frei beweglich angeordnet ist, daß das Entlüftungsventil bei vollständig gefülltem Zusatzbehälter von dem ballähnlichen Schwimmer verschlossen wird, wobei der Behälterabschnitt im Bereich des Entlüftungsventiles derart ausgebildet ist, daß das Entlüftungsventil immer exakt von dem Schwimmer verschlossen wird. Hierdurch wird ein unbeabsichtigter Austritt der sich im Zusatzbehälter befindlichen Flüssigkeit durch das Entlüftungsventil auf einfachste Weise verhindert, ohne daß eine manuelle Beobachtung notwendig ist.

Weiterhin ist erfindungsgemäß vorgesehen, daß der Behälterabschnitt des Zusatzbehälters im Bereich der zum Flüssigkeitstank führenden Rücklaufleitung derart ausgebildet ist, daß der Schwimmer den Zusatzbehälterauslauf bei annähernd vollständig entleertem Behälter durch den in der Rücklaufleitung herrschenden Unterdruck exakt verschließt. Hierdurch wird erreicht, daß bei entleertem Frontbehälter keine Luft über die zum Flüssigkeitstank führende Rücklaufleitung aus dem Zusatzbehälter angesogen wird.

Zur vollständigen Entleerung des Zusatzbehälters z.B. beim Reinigen des geschlossenen landwirtschaftlichen Feldspritzensystems, kann es u.U. notwendig sein, den Schwimmer etwas vom Behälterauslauf abzuheben. Dieses wird in erfindungsgemäßer Weise dadurch erreicht, daß der Schwimmer im Zusatzbehälter zur vollständigen Entleerung des Zusatzbehälters vom Behälterauslauf durch einen einstellbaren Anschlag abgehoben werden kann.

Die die beiden Flüssigkeitsbehälter miteinander verbindenden Leitungen weisen erfindungsgemäß mit Schnellkupplungen versehene Trennstellen auf, wobei sich die Trennstellen der Leitungen im oberen Bereich des Flüssigkeitstanks der Feldspritze befinden. Hierdurch wird erreicht, daß beim Trennen der Leitungen sich evtl. in den Leitungsenden befindliche Spritzflüssigkeit zurück in den Flüssigkeitstank der Feldspritze strömt. Die Schnellkupplungen sind derart ausgebildet, daß sie jeweils aus einem Steckkupplungsteil und einem Stecker bestehen.

In einer besonders bevorzugten Ausführungsform ist erfindungsgemäß vorgesehen, daß im getrennten Zustand der Leitungen von den an der Feldspritze verbleibenden Leitungsenden das eine jeweils mit dem Steckkupplungsteil und das andere mit dem Stecker ausgerüstet ist. Hierdurch wird es möglich, die Leitungsenden miteinander zu verbinden, so daß sich wieder ein geschlossener Kreislauf ergibt und keine Spritzflüssigkeit versehentlich von den Wasserstrahlpumpen durch den offenen Leitungsquerschnitt ins Freie gefördert werden kann, sondern sofort wieder in den Flüssigkeitstank zurückgelangt.

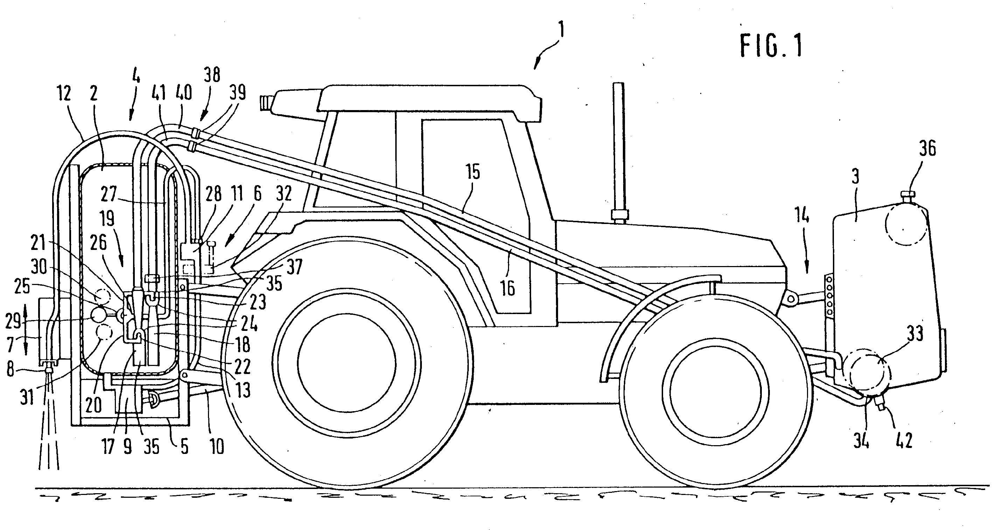

Weitere Einzelheiten der Erfindung sind den übrigen Unteransprüchen, der Beispielsbschreibung und den Zeichnungen zu entnehmen. Hierbei zeigen
- Fig. 1: das in erfindungsgemäßer Weise ausgerüstete geschlossene landwirtschaftliche Feldspritzensystem,
- Fig. 2: eine weiteres geschlossenes landwirtschaftliches Feldspritzensystem in Prinzipdarstellung,
- Fig. 3: das Verschließen des Entlüftungsventils des Zusatzbehälters durch den ballähnlichen Schwimmer in Teilansicht und im Schnitt sowie vergrößertem Maßstab und in Prinzipdarstellung,
- Fig. 4: das Verschließen der Auslauföffnung des Zusatzbehälters durch den ballähnlichen Schwimmer in Teilansicht, im Schnitt sowie in vergrößertem Maßstab und in Prinzipdarstellung,
- Fig. 5: das Anheben des Schwimmers zur vollkommenen Entleerung des Zusatzbehälters entsprechend der Darstellungsweise gemäß Fig. 4,
- Fig. 6: das Entleeren des Zusatzbehälters in der Ansicht VI - VI,
- Fig. 7: die Verbindung der Schläuche zum alleinigen Einsatz des Flüssigkeitstanks ohne Zusatzbehälter in Teilansicht,
- Fig. 8: die unterste Stellung des Schwimmers zur Betätigung des Dreiwegehahnes in Prinzipdarstellung,
- Fig. 9: die mittlere Stellung des Schwimmers zur Betätigung des Dreiwegehahnes in Prinzipdarstellung,
- Fig. 10: die oberste Stellung des Schwimmers zur Betätigung des Dreiwegehanes in Prinzipdarstellung,
- Fig. 11: den Dreiwegehahn bei unterster Stellung des Schwimmers in vergrößertem Maßstab und in Prinzipdarstellung,
- Fig. 12: den Dreiwegehahn bei mittlerer Stellung des Schwimmers in vergrößertem Maßstab und in Prinzipdarstellung,
- Fig. 13: den Dreiwegehahn bei oberster Stellung des Schwimmers in vergrößertem Maßstab und in Prinzipdarstellung,
- Fig. 14: eine weitere Ausbildung eines Dreiwegehahnes bei oberster Stellung des Schwimmers in Prinzipdarstellung,
- Fig. 15: eine weitere Ausbildung des Dreiwegehahnes bei oberster Stellung des Schwimmers in Prinzipdarstellung.

Das geschlossene landwirtschaftliche Feldspritzensystem besteht aus dem an der Heckseite des Schleppers 1 angeordneten Flüssigkeitstank 2 und dem an der Frontseite des Schleppers 2 angeordneten Zusatzbehälter 3. Der Flüssigkeitstank 2 ist Bestandteil der heckseitig angeordneten Feldspritze 4. Die Feldspritze 4 weist den Rahmen 5 auf, über den die Feldspritze 4 an den heckseitigen Dreipunktkraftheber 6 des Ackerschleppers 1 angebaut ist. Weiterhin weist die Feldspritze 4 das Verteilergestänge 7 mit seinen nebeneinander angeordneten Spritzdüsen 8 auf. Das Verteilergestänge 7 ist höhenbeweglich am Rahmen 5 der Feldspritze befestigt. Unterhalb des Flüssigkeitstanks 2 befindet sich die Pumpe 9. Der Antrieb dieser Pumpe 9 erfolgt über die Gelenkwelle 10 von der Schlepperzapfwelle des Ackerschleppers 1. Über die Pumpe 9 wird die sich im Flüssigkeitstank 2 befindliche Flüssigkeit angesaugt und über die als Dosiereinrichtung ausgebildete Bedienungsarmatur 11 in bekannter und daher nicht näher dargestellter Weise mittels der Leitung 12 den Spritzdüsen 8 des Verteilergestänges 7 zugeführt. Die Spritzflüssigkeit wird also mittels der Pumpe 9 über die Druckleitung 13 zur Bedienungsarmatur 11 gefördert und gelangt von hier aus in der eingestellten, gewünschten Ausbringmenge zu den Spritzdüsen 8.

Zur Vergrößerung des mit geführten Spritzflüssigkeitsvolumens befindet sich auf der Frontseite des Ackerschleppers 1 der Zusatzbehälter 3, welcher entweder über den Kuppelrahmen 14 oder bei vorhandener Fronthydraulik über die Fronthydraulik an der Frontseite des Ackerschleppers 1 angekuppelt ist. Zum Austausch der Spritzflüssigkeit zwischen dem heckseitig angeordneten Flüssigkeitstank 2 und dem frontseitigen Zusatzbehälter 3 sind die, die beiden Behälter 2 und 3 miteinander verbindenden Leitungen 15 und 16 notwendig. Hierbei ist die Leitung 15 als Zulaufleitung für den Zusatzbehälter 3 und die Leitung 16 als vom Zusatzbehälter 3 zum Flüssigkeitstank 2 führende Rücklaufleitung ausgebildet.

Im Inneren des Flüssigkeitstank 2 ist die aus den beiden Wasserstrahlpumpen 17 und 18 bestehende Fördereinrichtung 19 für den Flüssigkeitsaustausch zwischen den beiden Behältern 2 und 3 angeordnet. Hierbei befindet sich die Wasserstrahlpumpe 17 in der zum Zusatzbehälter 3 führenden Zulaufleitung 15 und die Wasserstrahlpumpe 18 in der Rücklaufleitung 16. Die Wasserstrahlpumpen 17 und 18 weisen jeweils die an den Leitungsstücken 20 bzw. 21 sich jeweils befindliche Düse 22 bzw. 23 auf. Die Düse 22 bzw. 23 ist jeweils im unmittelbaren Bereich des Einlaufkonusses 24 der jeweiligen Wasserstrahlpumpe 17 bzw. 18 angeordnet. Das freie Ende des jeweiligen Leitungsstückes 20 bzw. 21 ist an den Dreiwegehahn 25 angeschlossen. Über diesen Dreiwegehahn 25 sind die Düsen 22 und 23 der beiden Wasserstrahlpumpen 17 und 18 miteinander verbunden. An dem Eingang 26 des Dreiwegehahns 25 ist die von der Pumpe 9 beaufschlagbare Leitung 27 angeschlossen. Die Beaufschlagung dieser Leitung 27 von der Pumpe 9 erfolgt über die Bedienungsarmatur 11, an der die Leitung 27 mittels der Kupplung 28 angeschlossen ist.

Die Betätigung des Dreiwegehahns 25 erfolgt über den Schwimmer 29. In der mit durchgezogenen Linien dargestellten Position befindet sich der Schwimmer 29 in Neutralstellung. Die Betätigung des Dreiwegehahns 25 erfolgt automatisch über den Schwimmer 29 in Abhängigkeit vom Füllstand der Flüssigkeit des Flüssigkeitstanks 2. Steigt das Flüssigkeitsniveau im Flüssigkeitstank 2 an, nimmt der Schwimmer die mit strichpunktierten Linien dargestellte Position 30 ein, wodurch der dem Dreiwegehahn 25 über die Leitung 27 zugeleitete Flüssigkeitsstrom der Düse 22 der Wasserstrahlpumpe 17 zugeleitet wird. Nimmt der Schwimmer 29 entgegen die Position 31 ein, bedeutet dieses, daß sich das Flüssigkeitsniveau im Flüssigkeitsbehälter 2 absenkt Nun wird der Dreiwegehahn 25 in der Weise betätigt, daß die dem Dreiwegehahn über die Leitung 27 zugeführte Flüssigkeitsmenge der Düse 23 der Wasserstrahlpumpe 18 zugeführt wird.

Erfolgt die Beaufschlagung des Dreiwegehahns 25 mit Flüssigkeit über die Bedienungsarmatur 11 ist der am Eingang 26 des Dreiwegehahns angeschlossene Leitung 27 herrschende Druck über die Bedienungsarmatur 11 der Feldspritze einstellbar. D.h., daß der eingestellte Druck zur Beaufschlagung der Wasserstrahlpumpen 17 und 18 dem eingestellten Spritzdruck, mit dem die Spritzflüssigkeit von den Spritzdüsen 8 ausgebracht wird, entspricht.

Reicht der an der Bedienungsarmatur 11 eingestellte Spritzdruck, mit dem nun auch die Düsen 22 und 23 der Wasserstrahlpumpen 17 und 18 beaufschlagt werden, nicht zur Erzielung einer ausreichenden Förderwirkung der Wasserstrahlpumpen 17 und 18 aus, wird die Leitung 27 von der Bedienungsarmatur 11 demontiert und mit dem, mit strichpunktierten Linien dargestellten Überdruckventil 32 verbunden. Dieses Überdruckventil 32 befindet sich in der Druckleitung 13 und ist der Bedienungsarmatur 11 vorgeschaltet. Dieses Überdruckventil kann einen konstanten oder einstellbaren Druckwert aufweisen, so daß in jedem Falle der zu ordnungsgemäßen Funktionsweise der Wasserstrahlpumpen 17 und 18 notwendige Mindestdruck des die Düsen der jeweiligen Waserstrahlpumpe beaufschlagenden Wasserstrahls zur Erzielung einer ausreichenden Förderwirkung erreicht wird. Der zu den Wasserstrahlpumpen 17 und 18 von der Pumpe 9 geförderte Volumenstrom gelangt also nicht mehr über die Bedienungsarmatur 11, sondern über dar Überdruckventil 32 zu dem Dreiwegehahn 25 und von hier zu den Düsen 22 bzw. 23.

Im Folgenden wird das Befüllen, Anmischen sowie der Flüssigkeitsaustausch zwischen den Behältern 2 und 3 erläutert:

Das Befüllen und Anmischen der Spritzflüssigkeit des aus dem Flüssigkeitstank 2 und dem Zusatzbehälter 3 bestehenden geschlossenen landwirtschaftlichen Feldspritzensystems erfolgt zentral über den Flüssigkeitstank 2. Hierzu wird der Flüssigkeitstank in bekannter Weise über den Einfülldom oder eine Befülleinrichtung mit als Trägerflüssigkeit dienendem Wasser aufgefüllt. Während des Befüllvorganges des Flüssigkeitstanks 2 wird die Pumpe 9 mittels der Gelenkwelle 10 von der Zapfwelle des Ackerschleppers 1 angetrieben. Zunächst nimmt der Schwimmer 29 die Position 31 auf, wodurch der Dreiwegehahn 25 die von der Pumpe 9 während des Befüllvorganges angesaugte Flüssigkeit zu der in der Rücklaufleitung 16 sich befindlichen Wasserstrahlpumpe 18, d.h. ihrer Düse 23, fördert. Hierdurch entsteht ein Unterdruck in der Rücklaufleitung 16, wodurch der sich im Zusatzbehälter befindliche ballähnliche Schwimmer 33 sich zum Zusatzbehälterauslauf 34 orientiert und diesen Auslauf 34 durch den in der Rücklaufleitung 16 herrschenden Unterdruck verschließt.

Hierdurch wird verhindert, daß die Waserstrahlpumpe 18 Luft aus dem Zusatzbehälter 3 ansaugt, wodurch es zu einer unerwünschten Schaumbildung im Flüssigkeitstank 2 kommen würde.

Während des Befüllvorganges steigt das Flüssigkeitsniveau im Flüssigkeitstank 2 an, wodurch eine Betätigung des Dreiwegehahn 25 über den Schwimmer 29 erfolgt. Durch das Steigen des Flüssigkeitsniveaus wird der Schwimmer 29 in die Position 30 verschwenkt, und der Dreiwegehahn 25 derart betätigt, daß die von der Pumpe 9 geförderte und die Leitung 27 beaufschlagende Flüssigkeit der Düse 22 der Wasserstrahlpumpe 17 zugeführt wird. Hierdurch wird erreicht, daß über den Einlaufzylinder 35 der Wasserstahlpumpe 17 Flüssigkeit aus dem Flüssigkeitstank 2 angesogen und über die Zulaufleitung 15 in den Zusatzbehälter 3 gelangt. Während des Befüllvorganges des Flüssigkeitstanks 2 findet also ein automatischer Austausch der Spritzflüssigkeit zwischen dem Flüssigkeitstank 2 und dem Zusatzbehälter 3 statt, wobei die Betätigung des Dreiwegehahns 25 automatisch über den Schwimmer 29 in Abhängigkeit vom Füllstand der Flüssigkeit des Flüssigkeitstanks 2 erfolgt.

Je nach der in den Flüssigkeitstank 2 zugefüllten Wassermenge während des Befüllvorganges des landwirtschaftlichen Feldspritzensystems steigt das Flüssigkeitsniveau entweder gleichmäßig in beiden Behältern 2 bzw. 3 an oder aber es wird zunächst der Zusatzbehälter 3 mit Flüssigkeit gefüllt, bevor das Flüssigkeitsniveau im Flüssigkeitstank 2 weiter ansteigt. Der ballähnliche Schwimmer 33 im Zusatzbehälter 3 wird von dem ansteigenden Flüssigkeitsniveau getragen und verschließt bei vollständig gefülltem Zusatzbehälter 3 das Entlüftungsventil 36. Ist der Zusatzbehälter 3 vollständig gefüllt und nimmt der Schwimmer 29 die Position 30 ein, wird also noch ständig Flüssigkeit vom Flüssigkeittank 2 über die Zulaufleitung 15 in den Zusatzbehälter 3 gefördert, wobei diese in den Zusatzbehälter 3 geförderte Flüssigkeitsmenge drucklos über die Rücklaufleitung 16 in den Flüssigkeitstank 2 zurückfließt. Aus diesem Grunde ist das Überdruckventil 37 vor dem Einlaufkonus 24 der Wasserstahlpumpe 18 angeordnet.

Das Anmischen der Spritzflüssigkeit erfolgt zentral über den Flüssigkeitstank 2 und parallel zur Befüllung mit Wasser nimmt der Anwender beim Ansetzen der Spritzmittelflüssigkeit die Zugabe des Pflanzenschutzmittels vor, in dem die für die sich im Flüssigkeitstank 2 und dem Zusatzbehälter 3 befindlichen Wassermengen entsprechende Menge des hochprozentigen Spritzmittelkonzentrates eingefüllt wird. Durch die ständige Umwälzung der Flüssigkeit zwischen dem Flüssigkeitstank 2 und dem Zusatzbehälter 3 wird eine hervorragende Rührwirkung erreicht, so daß es zu einem guten Durchmischen und zu einer Homogenisierung der sich im geschlossenen Feldspritzensystem befindlichen Spritzflüssigkeit kommt.

Während des Spritzvorganges wird nun zunächst solange Spritzflüssigkeit aus dem Flüssigkeitstank 2 entnommen, bis daß das Umpumpen der sich im Zusatzbehälter 3 befindlichen Spritzflüssigkeit mittels der Wasserstrahlpumpe 18 erfolgt. Nun wird zunächst der Zusatzbehälter 3 vollständig entleert, wobei der ballähnliche Schwimmer 33 im entleerten Zustand des Zusatzbehälters 3 den Zusatzbehälterauslauf 34 verschließt, so daß keine Luft von der Wasserstrahlpumpe 18 in den Flüssigkeitstank 2 angesogen wird. Erst nach dem vollständigen Entleeren des Zusatzbehälters 3 wird der Flüssigkeitstank 2 vollständig entleert.

Die Leitungen 15 und 16 weisen die Trennstelle 38 auf. Soll nun die Feldspritze 4 ohne Zusatzbehälter 3 eingesetzt werden, bzw. zur Demontage des Zusatzbehälters 3 vom Ackerschlepper 1, werden die Kupplungen 39 getrennt.

Die Kupplungen 39 sind als Schnellkupplungen ausgebildet und bestehen jeweils aus einem Steckkupplungsteil und einem Stecker. Im getrennten Zustand der Leitungen 15 und 16 ist das eine am Flüssigkeitstank 2 verbleibende Leitungsende 40 mit einem Steckkupplungsteil und das andere Leitungsende 41 mit einem Stecker ausgerüstet. Die Leitungsenden 40 und 41 werden mittels dieser Bauteile wieder zusammengesteckt, so daß sich ein geschlossener Kreislauf ergibt.

Zur Reinigung des Feldspritzensystems kann es evtl. notwendig sein, zum restlosen Entleeren bzw. Absaugen der Flüssigkeit aus dem Zusatzbehälter 3, daß der ballähnliche Schwimmer 3 mittels eines einstellbaren Anschlages 42 vom Behälterauslauf 34 angehoben wird.

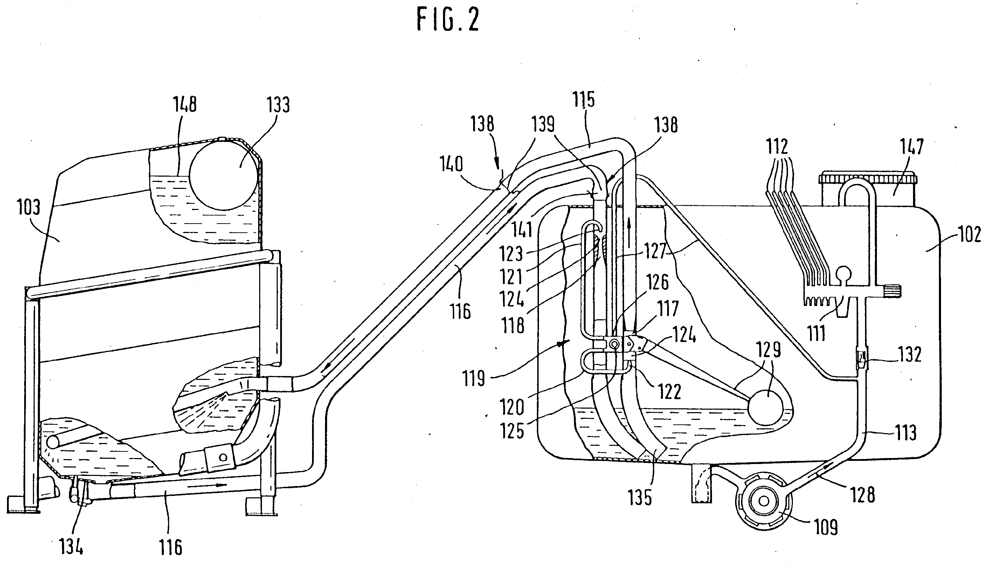

Das geschlossene landwirtschaftliche Feldspritzensystem gemäß den Fig. 2 bis 13 besteht aus dem an der Heckseite eines Schleppers anzuordnenden Flüssigkeitstank 102 und dem an der Frontseite eines Schleppers anzuordnenden Zusatzbehälter 103. Der Flüssigkeitstank 102 ist Bestandteil einer heckseitig an einem Schlepper anzuordnenden Feldspritze. Unterhalb des Flüssigkeitstanks 102 befindet sich die Pumpe 109. Der Antrieb dieser Pumpe 109 erfolgt über eine Gelenkwelle von der Schlepperzapfwelle eines Ackerschleppers. Über die Pumpe 109 wird die sich im Flüssigkeitstank 102 befindliche Flüssigkeit angesaugt und über die als Dosiereinrichtung ausgebildete Bedienungsarmatur 111 in bekannter und daher nicht näher dargestellter Weise mittels der Leitungen 112 den Spritzdüsen des Verteilergestänges zugeführt. Die Spritzflüssigkeit wird also mittels der Pumpe 109 über die Druckleitung 113 zur Bedienungsarmatur 111 gefördert und gelangt von hier aus in der eingestellten und gewünschten Ausbringmenge zu den Spritzdüsen.

Zur Vergrößerung des vom Schlepper im Feldspritzensystem mitzuführenden Spritzflüssigkeitsvolumens ist an der Frontseite eines Ackerschleppers der Zusatzbehälter 103 vorgesehen, welcher entweder über einen Kuppelrahmen oder bei vorhandener Fronthydraulik über die Fronthydraulik an der Frontseite eines Ackerschleppers anzukuppeln ist. Zum Austausch der Spritzflüssigkeit zwischen dem Flüssigkeitstank 102 und dem Zusatzbehälter 103 sind zwischen den beiden Behältern 102 und 103 die Leitungen 115 und 116 angeordnet. Hierbei ist die Leitung 115 als Zulaufleitung vom Flüssigkeitstank 102 zum Zusatzbehälter 103 und die Leitung 116 als vom Zusatzbehälter 103 zum Flüssigkeitstank 102 führende Rücklaufleitung ausgebildet.

Im Inneren des Flüssigkeitstank 102 ist die aus den beiden Wasserstrahlpumpen 117 und 118 bestehende Fördereinrichtung 119 für den Flüssigkeitsaustausch zwischen den beiden Behältern 102 und 103 angeordnet. Hier befindet sich die Wasserstrahlpumpe 117 in der zum Zusatzbehälter 103 führenden Zulaufleitung 115 und die Wasserstrahlpumpe 118 in der Rücklaufleitung 116. Die Wasserstrahlpumpen 117 und 118 weisen jeweils die an den Leitungsstücken 120 bzw. 121 sich jeweils befindliche Düse 122 bzw. 123 auf. Die Düse 122 bzw. 123 ist jeweils im unmittelbaren Bereich des Einlaufkonusses 124 der jeweiligen Wasserstrahlpumpe 117 bzw. 118 angeordnet. Das freie Ende des jeweiligen Leitungsstückes 120 bzw. 121 ist an den Dreiwegehahn 125 angeschlossen. Über diesen Dreiwegehahn 125 sind die Düsen 122 und 123 der beiden Wasserstrahlpumpen 117 und 118 mit dem Eingang 126 des Dreiwegehahnes 125 verbunden. An dem Eingang 126 des Dreiwegehahns 125 ist die von der Pumpe 109 beaufschlagbare Leitung 127 angeschlossen. Die Leitung 127 ist an die Druckleitung 113 angeschlossen. In der Druckleitung 113 ist ein als Überdruckventil 132 ausgebildetes Druckventil, welches beispielsweise auch als Mengenteiler etc. ausgebildet sein kann, angeordnet. Hierbei ist die Leitung 127 in Durchflußrichtung 128 gesehen, vor dem Überdruckventil 132 an die Druckleitung 113 angeschlossen.

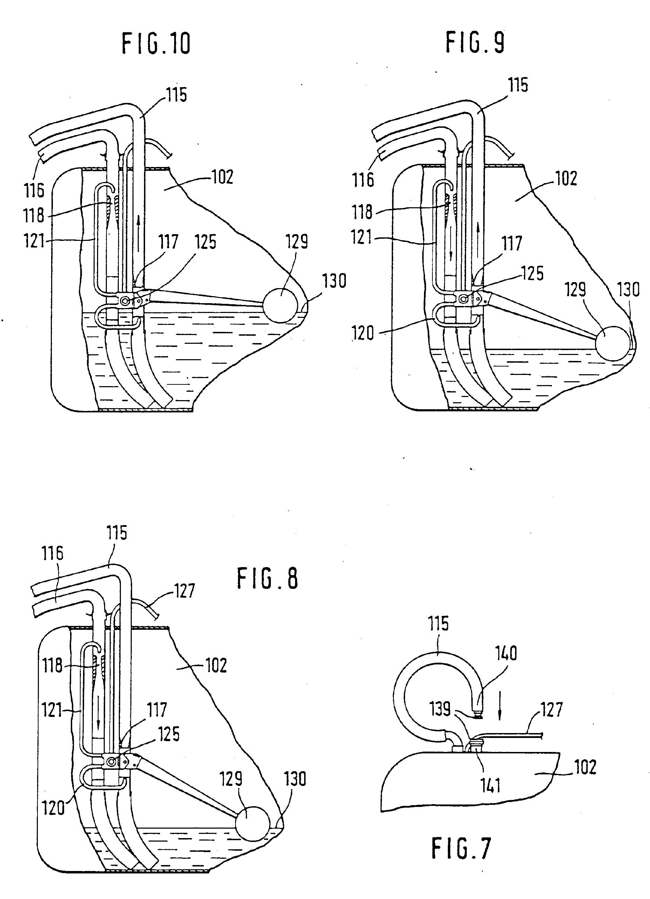

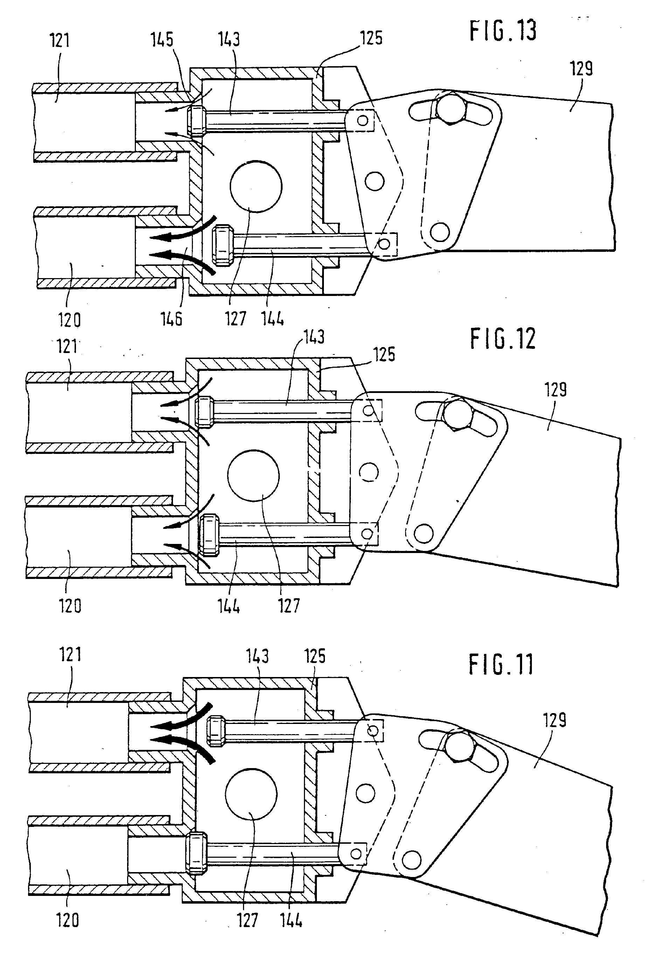

Die Betätigung des Dreiwegehahns 125 erfolgt über den Schwimmer 129. In der dargestellten Position befindet sich der Schwimmer 129 in seiner untersten Stellung entsprechend Fig. 8 und 11. Die Betätigung des Dreiwegehahns 125 erfolgt automatisch über den Schwimmer 129 in Abhängigkeit vom Füllstand 130 der Flüssigkeit des Flüssigkeitstanks 102. Steigt das Flüssigkeitsniveau im Flüssigkeitstank 102 an, nimmt der Schwimmer die in Fig. 9 und 12 dargestellte Position ein, wodurch der dem Dreiwegehahn 125 über die Leitung 127 zugeleitete Flüssigkeitsstrom der Düse 122 der Wasserstrahlpumpe 117 zugeführt wird. Nimmt der Schwimmer 129 dagegen die Position gemäß Fig. 10 und 13 ein, bedeutet dieses, daß sich das Flüssigkeitsniveau im Flüssigkeitsbehälter 102 absenkt. Nun ist der Dreiwegehahn 125 in der Weise geschaltet, daß die dem Dreiwegehahn 125 über die Leitung 127 zugeführte Flüssigkeitsmenge der Düse 123 der Wasserstrahlpumpe 118 zugeführt wird.

Der Dreiwegehahn 125 weist die Einlaufleitung 127, die Ablaufleitungen 120 und 121 sowie die beiden von dem Schwimmer 129 betätigten Ventilstößel 143 und 144 auf. Der der Leitung 121 zugeordnete Ventilstößel 143 ist derart ausgebildet, daß in der in Fig. 13 dargestellten Einstellung des Ventilstößels 143 noch die ringförmige Durchflußöffnung 145 zur Leitung 121 erhalten bleibt. Der Ventilstößel 143 weist zu diesem Zweck an seinem Ende einen kleineren Durchmesser als der Ventilsitz auf, so daß die Durchflußöffnung 145 entsteht. In der Position des Dreiwegehahnes 125 gemäß Fig. 13 ist der andere Ventilstößel 144 zurückgezogen, so daß die Durchflußöffnung 146 vollkommen vom Ventilstößel vollkommen freigegeben ist.

In der in Fig. 12 dargestellten mittleren Position des Schwimmers 129 ist der Durchfluß von den Leitungen zu den Leitungen 120 und 121 durch die Ventilstößel 143 und 144 etwas verringert.

In der in Fig. 11 dargestellten unteren Position des Schwimmers 129 wird durch den Ventilstößel 144 die Leitung 120 verschlossen, während der andere Ventilstößel 143 vollkommen zurückgezogen ist, so daß die von der Leitung 127 zugeführte Flüssigkeit ungehindert zur Leitung 121 strömen kann.

Im Folgenden wird das Befüllen, Anmischen sowie der Flüssigkeitsaustausch zwischen den Behältern 2 und 3 erläutert:

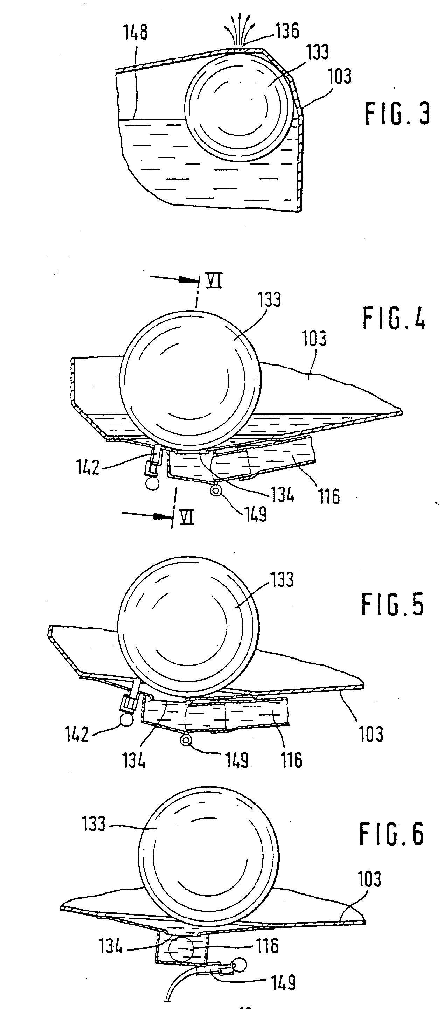

Das Befüllen und Anmischen der Spritzflüssigkeit des aus dem Flüssigkeitstank 102 und dem Zusatzbehälter 103 bestehenden geschlossenen landwirtschaftlichen Feldspritzensystems erfolgt zentral über den Flüssigkeitstank 102. Hierzu wird der Flüssigkeitstank 102 in bekannter Weise über den Einfülldom 147 oder eine Befülleinrichtung mit dem als Trägerflüssigkeit dienenden Wasser aufgefüllt. Während des Befüllvorganges des Flüssigkeitstanks 102 wird die Pumpe 109 mittels der Gelenkwelle von der Zapfwelle eines Ackerschleppers angetrieben. Zunächst nimmt der Schwimmer 129 die untere Position gemäß Fig. 8 und 11 ein, wodurch der Dreiwegehahn 125 die von der Pumpe 109 während des Befüllvorganges angesaugte Flüssigkeit zu der in der Rücklaufleitung 116 sich befindlichen Wasserstrahlpumpe 118 d.h. ihrer Düse 123, fördert. Hierdurch entsteht ein Unterdruck in der Rücklaufleitung 116, wodurch der sich im Zusatzbehälter 103 befindliche ballähnliche Schwimmer 133 sich zum Zusatzbehälterauslauf 134 orientiert und diesen Auslauf 134 entsprechend Fig. 4 durch den in der Rücklaufleitung 116 herrschenden Unterdruck verschließt. Hierdurch wird verhindert, daß die Waserstrahlpumpe 118 Luft aus dem Zusatzbehälter 103 ansaugt, wodurch es sonst zu einer unerwünschten Schaumbildung im Flüssigkeitstank 102 kommen würde.

Während des Befüllvorganges steigt das Flüssigkeitsniveau 130 im Flüssigkeitstank 102 an, wodurch eine Betätigung des Dreiwegehahn 125 über den Schwimmer 129 erfolgt. Durch das Steigen des Flüssigkeitsniveaus wird der Schwimmer 129 über die mittlere Position gemäß Fig. 9 und 12 in die obere Position gemäß Fig. 10 und 13 verschwenkt, und der Dreiwegehahn 125 wird derart geschaltet, daß die von der Pumpe 109 geförderte und die Leitung 127 beaufschlagende Flüssigkeit der Düse 122 der Wasserstrahlpumpe 117 zugeführt wird. Hierbei verschließt der Ventilstößel 127 bis auf die Durchflußöffnung 145 die Öffnung zu der Leitung 121, während der Ventilstößel 144 ganz zurückgezogen wird. Hierdurch wird erreicht, daß über den Einlaufschlauch 135 der Wasserstahlpumpe 117 Flüssigkeit aus dem Flüssigkeitstank 102 angesogen und über die Zulaufleitung 115 in den Zusatzbehälter 103 gelangt. Während des Befüllvorganges des Flüssigkeitstanks 102 findet also ein automatischer Füllvorgang des Zusatzbehälters 103 mit der Spritzflüssigkeit statt, wobei die Betätigung des Dreiwegehahns 125 automatisch über den Schwimmer 129 in Abhängigkeit vom Füllstand der Flüssigkeit des Flüssigkeitstanks 102 erfolgt.

Je nach der dem Flüssigkeitstank 102 zugefüllten Wassermenge während des Befüllvorganges des landwirtschaftlichen Feldspritzensystems steigt das Flüssigkeitsniveau zunächst etwas in dem Behälter 102 an. Nach dem Umschalten des Dreiwegehahnes 125 in die Position gemäß Fig. 10 und 13 wird der Zusatzbehälter 103 ganz mit Flüssigkeit gefüllt, bevor das Flüssigkeitsniveau im Flüssigkeitstank 102 weiter ansteigt. Der ballähnliche Schwimmer 133 im Zusatzbehälter 103 wird von dem ansteigenden Flüssigkeitsniveau 148 getragen und verschließt bei vollständig gefülltem Zusatzbehälter 103 das Entlüftungsventil 36, wie Fig. 3 zeigt. Ist der Zusatzbehälter 103 vollständig gefüllt, wird also noch ständig Flüssigkeit vom Flüssigkeittank 102 über die Zulaufleitung 115 in den Zusatzbehälter 103 gefördert, wobei diese in den Zusatzbehälter 103 geförderte Flüssigkeitsmenge über die Rücklaufleitung 116 in den Flüssigkeitstank 102 zurückgelangt. Damit diese Flüssigkeitsmenge, ohne daß ein großer Überdruck im Zusatzbehälter 103 sich aufbaut, schnell wieder in den Flüssigkeitstank 102 zurückgelangt, wird über die Durchflußöffnung 145 und der Leitung 121 die Wasserstrahlpumpe 118 mit Flüssigkeit über die Düse 123 beaufschlagt. Diese geringe Flüssigkeitsmenge reicht aus um eine kleine Saugwirkung zu erzeugen, um zumindest den Staudruck vor und in dem Einlaufkonus 124 der Wasserstrahlpumpe 118 zu eliminieren.

Das Anmischen der Spritzflüssigkeit erfolgt zentral über den Flüssigkeitstank 102 und parallel zur Befüllung mit Wasser nimmt der Anwender beim Ansetzen der Spritzmittelflüssigkeit die Zugabe des Pflanzenschutzmittels vor, in dem die für die sich im Flüssigkeitstank 102 und dem Zusatzbehälter 103 anzumischende Wassermenge entsprechende Menge des hochprozentigen Spritzmittelkonzentrates eingefüllt wird. Durch die ständige Umwälzung der Flüssigkeit zwischen dem Flüssigkeitstank 102 und dem Zusatzbehälter 103 wird eine hervorragende Rührwirkung erreicht, so daß es zu einem guten Durchmischen und zu einer Homogenisierung der sich im geschlossenen Feldspritzensystem befindlichen Spritzflüssigkeit kommt.

Während des Spritzvorganges wird zunächst so lange Spritzflüssigkeit aus dem Flüssigkeitstank 102 entnommen, bis daß das Umpumpen der sich im Zusatzbehälter 103 befindlichen Spritzflüssigkeit mittels der Wasserstrahlpumpe 118 erfolgt. Dieses ist der Fall, wenn der Flüssigkeitsspiegel 130 im Flüssigkeitstank 102 entsprechend Fig. 9 bzw. 8 abgesunken ist. Nun wird zunächst der Zusatzbehälter 103 vollständig entleert, wobei der ballähnliche Schwimmer 133 im entleerten Zustand des Zusatzbehälters 103 den Zusatzbehälterauslauf 134 verschließt, so daß keine Luft von der Wasserstrahlpumpe 118 in den Flüssigkeitstank 102 angesogen wird. Erst nach dem vollständigen Entleeren des Zusatzbehälters 103 wird der Flüssigkeitstank 102 vollständig entleert.

Die Leitungen 115 und 116 weisen die Trennstelle 138 auf. Soll nun die Feldspritze ohne Zusatzbehälter 103 eingesetzt werden, bzw. zur Demontage des Zusatzbehälters 103 vom Ackerschlepper, werden die Kupplungen 139 getrennt. Die Kupplungen 139 sind als Schnellkupplungen ausgebildet und bestehen jeweils aus einem Steckkupplungsteil und einem Stecker. Im getrennten Zustand der Leitungen 115 und 116 ist das eine am Flüssigkeitstank 102 verbleibende Leitungsende 140 mit eine Steckkupplungsteil und das andere Leitungsende 141 mit einem Stecker ausgerüstet. Die Leitungsenden 140 und 141 werden mittels dieser Bauteile entsprechend Fig. 7 wieder zusammengesteckt, so daß sich ein geschlossener Kreislauf für den Flüssigkeittank 102 unabhängig vom Zusatzbehälter 103 ergibt.

Zur Reinigung des Feldspritzensystems kann es evtl. notwendig sein, zum restlosen Entleeren bzw. Absaugen der Flüssigkeit aus dem Zusatzbehälter 103, daß der ballähnliche Schwimmer 133 mittels eines einstellbaren Anschlages 142 vom Behälterauslauf 134 entsprechend Fig. 5 abgehoben wird, somit kann über die Leitung 116 die Flüssigkeit restlos in Flüssigkeitstank 102 abgesaugt werden.

Sollte das restlose Absaugen nicht möglich sein, so kann die Restmenge über den Ablaßhahn 149, wie Fig. 6 gezeigt, abgelassen werden.

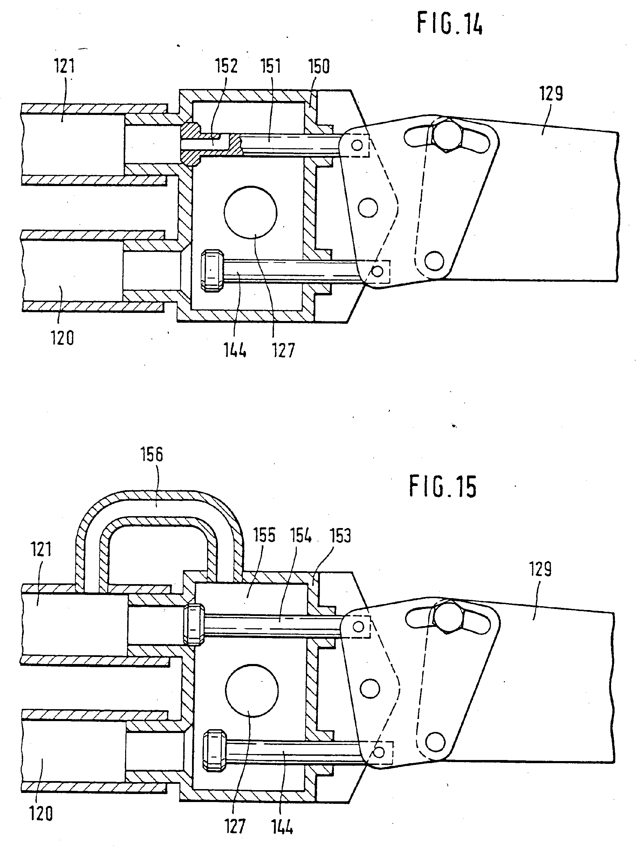

Der Dreiwegehahn 150 gemäß Fig. 14 unterscheidet sich vom Dreiwegehahn 125 durch eine andere Ausbildung des der Leitung 121 zugeordneten Ventilstößels. Dieser Ventilstößel 151 weist die Bypaßbohrung 152 auf, so daß bei oberster Stellung des Schwimmers 129 gemäß Fig. 10, wenn der Ventilstößel 151 auf seinem Ventilsitz aufsitzt, noch eine kleine Durchflußöffnung entsprechend der Durchflußöffnung 145 gemäß Fig. 13 mit gleicher Funktionsweise bleibt.

Der Dreiwegehahn 153 gemäß Fig. 15 weist die beiden vom Schwimmer 129 betätigten Ventilstößel 144 und 154 auf. Weiterhin ist zwischen dem Ventilraum 155 und somit der Leitung 127 einerseits und der Leitung 121 andererseits die Bypaßleitung 156 mit kleinem Querschnitt angeordnet. Die Bypaßleitung 156 hat die gleiche Funktion wie die Druchflußöffnung 145 gemäß Fig. 13.

## Patentansprüche

1. Geschlossenes landwirtschaftliches Feldspritzensystem, bestehend aus einem Flüssigkeitstank (2,102) und einem Zusatzbehälter (3,103), die über ein Leitungssystem miteinander in Verbindung stehen und eine Fördereinrichtung (19,119) zum Umpumpen der Flüssigkeit aufweisen, wobei der Austausch der Spritzflüssigkeit zwischen dem Flüssigkeitstank (2,102) und dem Zusatzbehälter (3,103) mittels der in dem Flüssigkeitstank (2,102) angeordneten Fördereinrichtung (19,119) erfolgt, dadurch gekennzeichnet, daß die Fördereinrichtung (19,119) von zwei Wasserstrahlpumpen (17,18,117,118) gebildet wird, daß sich die eine Wasserstrahlpumpe (17,117) in der vom Flüssigkeitstank (2,102) zum Zusatzbehälter (3,103) führenden Zulaufleitung (15,115) und die andere Wasserstrahlpumpe (18,118) in der vom Zusatzbehälter (3,103) zum Flüssigkeitstank (2,102) führenden Rücklaufleitung (16,116) befindet und daß das Befüllen und Anmischen der Spritzflüssigkeit zentral über den Flüssigkeitstank (2,102) erfolgt.

2. Geschlossenes landwirtschaftliches Feldspritzensystem nach Anspruch 1, dadurch gekennzeichnet, daß der Austausch der Spritzflüssigkeit zwischen dem Flüssigkeitstank (2,102) und dem Zusatzbehälter (3,103) automatisch erfolgt.

3. Geschlossenes landwirtschaftliches Feldspritzensystem nach einem oder mehreren der vorstehenden Ansprüche, dadurch gekennzeichnet, daß der Flüssigkeitstank (2,102) an der Heckseite eines Ackerschleppers (1) ankuppelbar und Bestandteil einer Feldspritze (4) mit Pumpe (9,109), Dosierelementen (11,111) und Verteilergestänge (7) ist, daß der Zusatzbehälter (3,103) an der Frontseite des Ackerschleppers (1) ankuppelbar ist.

4. Geschlossenes landwirtschaftliches Feldspritzensystem nach einem oder mehreren der vorstehenden Ansprüche, dadurch gekennzeichnet, daß die jeweilige Wasserstrahlpumpe (17,18,117,118) eine von der Pumpe (9,109) der Feldspritze (4) beaufschlagbare Düse (22,23,122,123) aufweist, daß die Düse (22,23122,123) unmittelbar im Bereich des Einlaufkonusses (24,124) der jeweiligen Wasserstrahlpumpe (17,18,117,118) angeordnet ist.

5. Geschlossenes landwirtschaftliches Feldspritzensystem nach einem oder mehreren der vorstehenden Ansprüche, dadurch gekennzeichnet, daß sich an jeder Düse (22,23,122,123) ein Leitungsstück (20,21,120,121) anschließt, daß das freie Ende des jeweiligen Leitungsstückes (20,21,120,121) an einen Dreiwegehahn (25,125) angeschlossen ist, daß an dem Eingang (26,126) des Dreiwegehahns (25,125) die von der Pumpe (9,109) der Feldspritze (4) beaufschlagbare Leitung (27,127) angeschlossen ist.

6. Geschlossenes landwirtschaftliches Feldspritzensystem nach einem oder mehreren der vorstehenden Ansprüche, dadurch gekennzeichnet, daß der in der von der Pumpe (9) der Feldspritze (4) beaufschlagbaren, an dem Eingang (26) des Dreiwegehahns (25) angeschlossenen Leitung (27) herrschende Druck über die Bedienungsarmatur (11) der Feldspritze (4) einstellbar ist.

7. Geschlossenes landwirtschaftliches Feldspritzensystem nach einem oder mehreren der vorstehenden Ansprüche, dadurch gekennzeichnet, daß der einstellbare Druck zur Beaufschlagung der Düsen (22,23) der Wasserstrahlpumpen (17,18) dem eingestellten Spritzdruck entspricht.

8. Geschlossenes landwirtschaftliches Feldspritzensystem nach einem oder mehreren der vorstehenden Ansprüche, dadurch gekennzeichnet, daß sich in der von der Pumpe zur Bedienungsarmatur (11,111) führenden Leitung (13,113) ein der Bedienungsarmatur (11,111) vorgeschaltetes Überdruckventil (32,132) befindet.

9. Geschlossenes landwirtschaftliches Feldspritzensystem nach einem oder mehreren der vorstehenden Ansprüche, dadurch gekennzeichnet, daß das Überdruckventil (32,132) einen konstanten oder einstellbaren Druckwert aufweist.

10. Geschlossenes landwirtschaftliches Feldspritzensystem nach einem oder mehreren der vorstehenden Ansprüche, dadurch gekennzeichnet, daß die zu dem Dreiwegehahn (125) führende Leitung (127) in Durchflußrichtung (128) von der Pumpe (109) zu der Bediennungsarmartur (111) führenden Druckleitung (113) gesehen, vor dem Überdruckventil (132), an diese Druckleitung (113) angeschlossen ist.

11. Geschlossenes landwirtschaftliches Feldspritzensystem nach einem oder mehreren der vorstehenden Ansprüche, dadurch gekennzeichnet, daß mit dem Dreiwegehahn (25,125) ein Schwimmer (29,129) zusammenwirkt, daß die Betätigung des Dreiwegehahns (25,125) automatisch über den Schwimmer (29,129) in Abhängigkeit vom Füllstand der Flüssigkeit (2,102) des Flüssigkeitstank erfolgt.

12. Geschlossenes landwirtschaftliches Feldspritzensystem nach einem oder mehreren der vorstehenden Ansprüche, dadurch gekennzeichnet, daß der Austausch der Spritzflüssigkeit zwischen dem Flüssigkeitstank (2,102) und dem Zusatzbehälter (3,103) automatisch über den Schwimmer (29,129) mittels des Dreiwegehahns (25,125) gesteuert wird.

13. Geschlossenes landwirtschaftliches Feldspritzensystem nach einem oder mehreren der vorstehenden Ansprüche, dadurch gekennzeichnet, daß der Dreiwegehahn (125,150,153) zwei abhängig voneinander bewegbare Ventile (143,144,151,154) aufweist, die jweils einer zu den Wasserstrahlpumpen (117,118) führenden Leitung (120,121) zugeordnet ist, wobei das der vom Zusatzbehälter (103) zum Flüssigkeitstank (102) führenden Leitung (116) zugeordneten Wasserstrahlpumpe (118) zugeordnete Ventil (143,151,153) in seiner Endstellung eine kleine Durchflußöffnung (145,152,156) aufweist.

14. Geschlossenes landwirtschaftliches Feldspritzensystem nach Anspruch 13, dadurch gekennzeichnet, daß dieses Ventil (151) eine Bohrung (152) aufweist.

15. Geschlossenes landwirtschaftliches Feldspritzensystem nach Anspruch 13, dadurch gekennzeichnet, daß der Ventilstößel (143) einen kleineren Druchmesser als der Ventilsitz aufweist.

16. Geschlossenes landwirtschaftliches Feldspritzensystem nach Anspruch 13, dadurch gekennzeichnet, daß das Maß zwischen Ventilsitz und Ventilstößel in seiner maximalen Arbeitsstellung größer ist als der Ventilstößelhub.

17. Geschlossenes landwirtschaftliches Feldspritzensystem nach einem oder mehreren der vorstehenden Ansprüche, dadurch gekennzeichnet, daß zwischen der Eingangsleitung (127) des Dreiwegehahnes (153) und der Düse der von dem Zusatzbehälter (103) zum Flüssigkeitstank (102) führenden Leitung (116) zugeordneten Wasserstrahlpumpe (118) eine Bypaßleitung (156) vorgesehen ist.

18. Geschlossenes landwirtschaftliches Feldspritzensystem nach einem oder mehreren der vorstehenden Ansprüche, dadurch gekennzeichnet, daß oberhalb des Einlaufzylinders (35) der in der zum Flüssigkeitstank (2) führenden Rücklaufleitung (16) angeordneten Wasserstrahlpumpe (18) sich zumindest ein Uberdruckventil (37) befindet.

19. Geschlossenes landwirtschaftliches Feldspritzensystem nach einem oder mehreren der vorstehenden Ansprüche, dadurch gekennzeichnet, daß der Zusatzbehälter (3,10) ein Entlüftungsventil (36,136) aufweist.

20. Geschlossenes landwirtschaftliches Feldspritzensystem nach einem oder mehreren der vorstehenden Ansprüche, dadurch gekennzeichnet, das in dem Zusatzbehälter (3,103) ein ballähnlicher Schwimmer (33,133) frei beweglich angeordnet ist, daß das Entlüftungsventil (36,136) bei vollständig gefülltem Zusatzbehälter (3,103) von dem ballähnlichen Schwimmer (33,133) verschlossen wird, wobei der Behälterabschnitt im Bereich des Entlüftungsventiles (36,136) derart ausgebildet ist, daß das Entlüftungsventil (36,136) immer exakt von dem Schwimmer (33,133) verschlossen wird, daß der Schwimmer (33,133) sich selbständig arretiert.

21. Geschlossenes landwirtschaftliches Feldspritzensystem nach einem oder mehreren der vorstehenden Ansprüche, dadurch gekennzeichnet, daß der Behälterabschnitt im Bereich der zum Flüssigkeitstank (2,102) führenden Rücklaufleitung (16,116) derart ausgebildet ist, daß der Schwimmer (33,133) sich zum Zusatzbehälterauslauf (34,134) arretiert und den Zusatzbehälterauslauf (34,134) bei vollständig entleertem Behälter (3,103) durch den in der Rücklaufleitung (16,116) herrschenden Unterdruck exakt verschließt.

22. Geschlossenes landwirtschaftliches Feldspritzensystem nach einem oder mehreren der vorstehenden Ansprüche, dadurch gekennzeichnet, daß der Schwimmer (33,133) im Zusatzbehälter (3,103) zum vollständigen Entleeren des Behälters (3,103) vom Behälterauslauf (34,134) durch einen einstellbaren Anschlag (42,142) angehoben werden kann.

23. Geschlossenes landwirtschaftliches Feldspritzensystem nach einem oder mehreren der vorstehenden Ansprüche, dadurch gekennzeichnet, daß die den Flüssigkeitstank (2,102) und den Zusatzbehälter (3,103) miteinander verbindenden Leitungen (15,16,115,116) zumindest eine mit Schnellkupplungen (39,139) versehene Trennstelle (38,138) aufweisen.

24. Geschlossenes landwirtschaftliches Feldspritzensystem nach einem oder mehreren der vorstehenden Ansprüche, dadurch gekennzeichnet, daß sich die Trennstelle (38,138) der Leitungen (15,16,115,116) im oberen Bereich des Flüssigkeitstanks (2,102) befindet.

25. Geschlossenes landwirtschaftliches Feldspritzensystem nach einem oder mehreren der vorstehenden Ansprüche, dadurch gekennzeichnet, daß die Schnellkupplungen (39,139) jeweils aus Steckkupplungsteil und Stecker bestehen.

26. Geschlossenes landwirtschaftliches Feldspritzensystem nach einem oder mehreren der vorstehenden Ansprüche, dadurch gekennzeichnet, daß im getrennten Zustand der Leitungen (15,16,115,116) von den am Flüssigkeitstank (2,102) verbleibenden Leitungsenden (40,41,140,141) das eine jeweils mit dem Steckkupplungsteil und das andere mit dem Stecker ausgerüstet ist.

## Claims

1. Self-contained, agricultural field spraying system, including a liquid container (2, 102) and an additional vessel (3, 103), which communicate with each other via a line system and have a conveyor means (19, 119) for pumping-round the liquid, the spray liquid between the liquid container (2, 102) and the additional vessel (3, 103) being exchanged between the liquid container (2, 102) and the additional vessel (3, 103) by means of the conveyor means (19, 119) disposed in the liquid container (2, 102), characterised in that the conveyor means (19, 119) is formed by two water-jet pumps (17, 18, 117, 118), in that one water-jet pump (17, 117) is situated in the supply line (15, 115) extending from the liquid container (2, 102) to the additional vessel (3, 103), and the other water-jet pump (18, 118) is situated in the return line (16, 116) extending from the additional vessel (3, 103) to the liquid container (2, 102), and in that the spray liquid is introduced and mixed centrally via the liquid container (2, 102).

2. Self-contained, agricultural field spraying system according to claim 1, characterised in that the spray liquid is automatically exchanged between the liquid container (2, 102) and the additional vessel (3, 103).

3. Self-contained, agricultural field spraying system according to one or more of the preceding claims, characterised in that the liquid container (2, 102) is connectable to the rear end of a tractor (1) and is a component part of a field sprayer (4) having pump (9, 109), metering members (11, 111) and distributor tube assembly (7), and in that the additional vessel (3, 103) is connectable to the front end of the tractor (1).

4. Self-contained, agricultural field spraying system according to one or more of the preceding claims, characterised in that each water-jet pump (17, 18, 117, 118) includes a nozzle (22, 23, 122, 123), which is actuatable by the pump (9, 109) of the field sprayer (4), and in that the nozzle (22, 23, 122, 123) is in the immediate vicinity of the inlet cone (24, 124) of the respective water-jet pump (17, 18, 117, 118).

5. Self-contained, agricultural field spraying system according to one or more of the preceding claims, characterised in that a line portion (20, 21, 120, 121) communicates with each nozzle (22, 23, 122, 123), in that the free end of the respective line portion (20, 21, 120, 121) communicates with a three-way valve (25, 125), and in that the line (27, 127), which is actuatable by the pump (9, 109) of the field sprayer (4), communicates with the inlet (26, 126) of the three-way valve (25, 125).

6. Self-contained, agricultural field spraying system according to one or more of the preceding claims, characterised in that the pressure, which prevails in the line (27), which is actuatable by the pump (9) of the field sprayer (4) and communicates with the inlet (26) of the three-way valve (25), is adjustable via the control (11) of the field sprayer (4).

7. Self-contained, agricultural field spraying system according to one or more of the preceding claims, characterised in that the adjustable pressure for actuating the nozzles (22, 23) of the water-jet pumps (17, 18) corresponds to the adjusted spraying pressure.

8. Self-contained, agricultural field spraying system according to one or more of the preceding claims, characterised in that an excess-pressure valve (32, 132), which is connected upstream of the control (11, 111), is situated in the line (13, 113) extending from the pump to the control (11, 111).

9. Self-contained, agricultural field spraying system according to one or more of the preceding claims, characterised in that the excess-pressure valve (32, 132) has a constant or adjustable pressure value.

10. Self-contained, agricultural field spraying system according to one or more of the preceding claims, characterised in that, when viewed with respect to the throughflow direction (128) of the pressure line (113) extending from the pump (109) to the control (111), the line (127) extending to the three-way valve (125) communicates with this pressure line (113) upstream of the excess-pressure valve (132).

11. Self-contained, agricultural field spraying system according to one or more of the preceding claims, characterised in that a float (29, 129) co-operates with the three-way valve (25, 125), and in that the three-way valve (25, 125) is automatically actuated via the float (29, 129) in dependence on the filling level of the liquid in the liquid container (2, 102).

12. Self-contained, agricultural field spraying system according to one or more of the preceding claims, characterised in that the exchange of the spray liquid between the liquid container (2, 102) and the additional vessel (3, 103) is automatically controlled by means of the three-way valve (25, 125) via the float (29, 129).

13. Self-contained, agricultural field spraying system according to one or more of the preceding claims, characterised in that the three-way valve (125, 150, 153) includes two valves (143, 144, 151, 154), which are displaceable in dependence on each other and each have a line (120, 121) associated therewith, which line extends to the water-jet pumps (117, 118), the valve (143, 151, 154) being associated with the water-jet pump (118) associated with the line (116) extending from the additional vessel (103) to the liquid container (102), and said valve having a small throughflow aperture (145, 152, 156) in its end position.

14. Self-contained, agricultural field spraying system according to claim 13, characterised in that this valve (151) has a bore (152).

15. Self-contained, agricultural field spraying system according to claim 13, characterised in that the valve tappet (143) has a smaller diameter than the valve seat.

16. Self-contained, agricultural field spraying system according to claim 13, characterised in that the dimension between the valve seat and valve tappet in its maximum working position is greater than the valve tappet movement.

17. Self-contained, agricultural field spraying system according to one or more of the preceding claims, characterised in that a by-pass line (156) is provided between the inlet line (127) of the three-way valve (153) and the nozzle of the water-jet pump (118) associated with the line (116) extending from the additional vessel (103) to the liquid container (102).

18. Self-contained, agricultural field spraying system according to one or more of the preceding claims, characterised in that at least one excess-pressure valve (37) is situated above the feed cylinder (35) of the water-jet pump (18) disposed in the return line (16) extending to the liquid container (2).

19. Self-contained, agricultural field spraying system according to one or more of the preceding claims, characterised in that the additional vessel (3, 103) includes an air-vent valve (36, 136).

20. Self-contained, agricultural field spraying system according to one or more of the preceding claims, characterised in that a ball-like float (33, 133) is freely displaceably disposed in the additional vessel (3, 103), in that the air-vent valve (36, 136) is closed by the ball-like float (33, 133) when the additional vessel (3, 103) is completely full, the vessel portion in the vicinity of the air-vent valve (36, 136) being adapted so that the air-vent valve (36, 136) is always closed exactly by the float (33, 133), and in that the float (33, 133) is automatically locked in position.

21. Self-contained, agricultural field spraying system according to one or more of the preceding claims, characterised in that the vessel portion in the vicinity of the return line (16, 116) extending to the liquid container (2, 102), is adapted so that the float (33, 133) is locked in position relative to the additional vessel outlet (34, 134) and exactly closes the additional vessel outlet (34, 134), when the vessel (3, 103) is completely empty, as a result of the reduced pressure prevailing in the return line (16, 116).

22. Self-contained, agricultural field spraying system according to one or more of the preceding claims, characterised in that, in order to empty the vessel (3, 103) completely, the float (33, 133) in the additional vessel (3, 103) can be raised from the vessel outlet (34, 134) by means of an adjustable stop member (42, 142).

23. Self-contained, agricultural field spraying system according to one or more of the preceding claims, characterised in that the lines (15, 16, 115, 116), which interconnect the liquid container (2, 102) and the additional vessel (3, 103), have at least one disconnection point (38, 138), which is provided with quick-release couplings (39, 139).

24. Self-contained, agricultural field spraying system according to one or more of the preceding claims, characterised in that the disconnection point (38, 138) of the lines (15, 16, 115, 116) is situated in the upper region of the liquid container (2, 102).

25. Self-contained, agricultural field spraying system according to one or more of the preceding claims, characterised in that the rapid-release couplings (39, 139) each comprise a plug-in coupling member and a plug.

26. Self-contained, agricultural field spraying system according to one or more of the preceding claims, characterised in that, when the lines (15, 16, 115, 116) are in their separated state, one of the line ends (40, 41, 140, 141), remaining on the liquid container (2, 102) is provided with the plug-in coupling member, and the other end is provided with the plug.

## Revendications

1. Système pulvérisateur de champ à usage agricole, fermé, composé d'un réservoir de liquide (2, 102) et d'un réservoir complémentaire (3, 103) reliés par un système de conduite et une installation de transfert (19, 119) pour pomper le liquide, l'échange de liquide entre le réservoir (2, 102) et le réservoir complémentaire (3, 103) se faisant à l'aide d'une installation de transfert (19, 119) prévue dans le réservoir à liquide (2, 102), caractérisé en ce que l'installation d'alimentation (19, 119) est constituée par deux pompes à jet d'eau (17, 18, 117, 118), l'une des pompes à jet d'eau (17, 117) se trouvant dans la conduite d'alimentation (15, 115) reliant le réservoir de liquide (2, 102) au réservoir complémentaire (3, 103) et l'autre pompe à jet d'eau (18, 118) se trouvant dans la conduite de retour (16, 116) allant du réservoir complémentaire (3, 103) vers le réservoir de liquide (2, 102) et en ce que le remplissage et le mélange du liquide de pulvérisation se fait centralement par le réservoir à liquide (2, 102).

2. Système pulvérisateur de champ à usage agricole, fermé, selon la revendication 1, caractérisé en ce que l'échange de liquide de pulvérisation entre le réservoir de liquide (2, 102) et le réservoir supplémentaire (3, 103) se fait automatiquement.

3. Système pulvérisateur de champ à usage agricole, fermé, selon l'une ou plusieurs des revendications précédentes, caractérisé en ce que le réservoir de liquide (2, 102) peut être couplé à l'arrière d'un tracteur agricole (1) et fait partie d'un pulvérisateur de champ (4) avec une pompe (9, 109), des éléments de dosage (11, 111) et une barre de distribution (7) et le réservoir complémentaire (3, 103) se monte à l'avant du tracteur agricole (1).

4. Système pulvérisateur de champ à usage agricole, fermé, selon l'une ou plusieurs des revendications précédentes, caractérisé en ce que la pompe à jet d'eau (17, 18, 117, 118) respective comporte une buse (22, 23, 122, 123) sollicitée par la pompe (9, 109) du pulvérisateur de champ (4), la buse (22, 23, 122, 123) étant prévue directement au niveau du cône d'entrée (24, 124) de la pompe à jet d'eau respective (17, 18, 117, 118).

5. Système pulvérisateur de champ à usage agricole, fermé, selon l'une ou plusieurs des revendications précédentes, caractérisé en ce qu'a chaque buse (22, 23, 122, 123) est raccordé un morceau de conduite (20, 21, 120, 121), l'extrémité du morceau de conduite respective (20, 21, 120, 121) étant reliée à un robinet à trois voies (25, 125) et à l'entrée (26, 126) du robinet à trois voies (25, 125) est raccordée la conduite (27, 127) alimentée par la pompe (9, 109) du pulvérisateur de champ (4).

6. Système pulvérisateur de champ à usage agricole, fermé, selon l'une ou plusieurs des revendications précédentes, caractérisé en ce que la pression qui règne dans la conduite (27) sollicitée par la pompe (9) du pulvérisateur de champ (4), et qui est reliée à l'entrée (26) du robinet à trois voies (25) se règle par le robinet de commande (11) du pulvérisateur de champ (4).

7. Système pulvérisateur de champ à usage agricole, fermé, selon l'une ou plusieurs des revendications précédentes, caractérisé en ce que la pression réglable sollicitant les buses (22, 23) des pompes à jet d'eau (17, 18) correspond à la pression réglée pour la pulvérisation.

8. Système pulvérisateur de champ à usage agricole, fermé, selon l'une ou plusieurs des revendications précédentes, caractérisé en ce que la conduite (13, 113) partant de la pompe vers le robinet de commande (11, 111) comporte une soupape de surpression (32, 132) en amont du robinet de manoeuvre (11, 111).

9. Système pulvérisateur de champ à usage agricole, fermé, selon l'une ou plusieurs des revendications précédentes, caractérisé en ce que la soupape de surpression (32, 132) est à pression constante ou réglable.

10. Système pulvérisateur de champ à usage agricole, fermé, selon l'une ou plusieurs des revendications précédentes, caractérisé en ce que la conduite (127) reliée au robinet à trois voies (125) est reliée à la conduite de pression (113) en amont de la soupape de surpression (132), selon le sens de passage (128) dans la conduite (113) allant de la pompe (109) au robinet de manoeuvre (111).

11. Système pulvérisateur de champ à usage agricole, fermé, selon l'une ou plusieurs des revendications précédentes, caractérisé en ce qu'un flotteur (29, 129) coopère avec le robinet à trois voies (25, 125), la commande du robinet à trois voies (25, 125) étant assurée automatiquement par l'intermédiaire du flotteur (29, 129) en fonction du niveau de remplissage de liquide (2, 102) dans le réservoir de liquide.

12. Système pulvérisateur de champ à usage agricole, fermé, caractérisé en ce que l'échange de liquide de pulvérisation entre le réservoir de liquide (2, 102) et le réservoir complémentaire (3, 103) est commandé automatiquement par le flotteur (29, 129) à l'aide du robinet à trois voies (25, 125).

13. Système pulvérisateur de champ à usage agricole, fermé, caractérisé en ce que le robinet à trois voies (125, 150, 153) se compose de deux robinets (143, 144, 151, 154) mobiles indépendamment l'un de l'autre et auxquels est chaque fois associée une conduite (120, 121) allant vers l'une des pompes à jet d'eau (17, 118), la soupape (143, 151, 153) associée à la pompe à jet d'eau (118) de la conduite (116) allant du réservoir complémentaire (103) vers le réservoir à liquide (102) présente dans sa position de fin de course un orifice de passage (145, 152, 156).

14. Système pulvérisateur de champ à usage agricole, fermé, selon la revendication 13, caractérisé en ce que cette soupape (151) comporte un perçage (152).

15. Système pulvérisateur de champ à usage agricole, fermé, selon la revendication 13, caractérisé en ce que le poussoir de soupape (143) a un diamètre plus faible que le siège de soupape.

16. Système pulvérisateur de champ à usage agricole, fermé, selon la revendication 13, caractérisé en ce que la mesure entre le siège de soupape et le poussoir de soupape est, en position de travail, supérieure à la course du poussoir de soupape.

17. Système pulvérisateur de champ à usage agricole, fermé, selon l'une ou plusieurs des revendications précédentes, caractérisé en ce qu'entre la conduite d'entrée (127) du robinet à trois voies (153) et la buse de la pompe à jet d'eau (118) associée à la conduite reliant le réservoir complémentaire (103) au réservoir à liquide (102) comporte une conduite de dérivation (156).

18. Système pulvérisateur de champ à usage agricole, fermé, selon l'une ou plusieurs des revendications précédentes, caractérisé en ce qu'au-dessus du cylindre d'entrée (35) de la pompe à jet d'eau (18) associée à la conduite de retour (16) allant vers le réservoir de liquide (2), il y a au moins une soupape de surpression (37).

19. Système pulvérisateur de champ à usage agricole, fermé, selon l'une ou plusieurs des revendications précédentes, caractérisé en ce que le réservoir complémentaire (3, 10) comporte une soupape d'évacuation d'air (36, 136).

20. Système pulvérisateur de champ à usage agricole, fermé, selon l'une ou plusieurs des revendications précédentes, caractérisé en ce que dans le réservoir complémentaire (3, 103), il est prévu un flotteur (33, 133) en forme de ballon qui est mobile librement et la soupape d'évacuation d'air (36, 136), lorsque le réservoir complémentaire (3, 103) est complètement rempli, est fermée par le flotteur en forme de ballon (33, 133), le segment de réservoir étant réalisé au niveau de la soupape d'évacuation d'air (36, 136) pour que la soupape d'évacuation d'air (36, 136) soit fermée exactement par le flotteur (33, 133), ce flotteur (33, 133) se bloque automatiquement.

21. Système pulvérisateur champ à usage agricole, fermé, selon l'une ou plusieurs des revendications précédentes, caractérisé en ce que le segment de réservoir au niveau de la conduite de retour (16, 116) allant vers le réservoir de liquide (2, 102) est relié pour que le flotteur (33, 133) se bloque vers la sortie de réservoir complémentaire (34, 134) et que la sortie du réservoir complémentaire (34, 134) lorsque le réservoir (3, 103) est complètement vidé, soit fermée exactement par la dépression régnant dans la conduite de retour (16, 116).

22. Système pulvérisateur de champ à usage agricole, fermé, selon l'une ou plusieurs des revendications précédentes, caractérisé en ce que le flotteur (33, 133) du réservoir complémentaire (3, 103) peut être soulevé par une butée réglable (42, 142) pour vider complètement le réservoir (3, 103) par la sortie de réservoir (34, 134).

23. Système pulvérisateur de champ à usage agricole, fermé, selon l'une ou plusieurs des revendications précédentes, caractérisé en ce que les conduites (15, 16, 115, 116) qui relient le réservoir à liquide (2, 102) et le réservoir complémentaire (3, 103) comportent au moins un point de séparation (38, 138) muni d'un accouplement rapide (39, 139).

24. Système pulvérisateur de champ à usage agricole, fermé, selon l'une ou plusieurs des revendications précédentes, caractérisé en ce que le point de séparation (38, 138) des conduites (15, 16, 115, 116) se trouve dans la zone supérieure du réservoir à liquide (2, 102).

25. Système pulvérisateur de champ à usage agricole, fermé, selon l'une ou plusieurs des revendications précédentes, caractérisé en ce que les accouplements rapides (39, 139) sont constitués chaque fois d'une pièce d'accouplement par enfichage et d'une fiche.

26. Système pulvérisateur de champ à usage agricole, fermé, selon l'une ou plusieurs des revendications précédentes, caractérisé en ce qu'à l'état séparé des conduites (15, 16, 115, 116) les extrémités de conduite (40, 41, 140, 141) qui restent au réservoir de liquide (2, 102) ont chaque fois une partie d'accouplement d'enfichage et l'autre comporte une fiche.
